# EUROPÄISCHE PATENTANMELDUNG

(11) **EP 4 325 830 A1**
(43) Veröffentlichungstag der Anmeldung: **21.02.2024**
(21) Anmeldenummer: 23191427.6
(22) Anmeldetag: 14.08.2023
(51) Int. Cl.: H04N 1/54, H04N 1/60

(54) **VERFAHREN ZUR DURCHFÜHRUNG VON FARBRAUMTRANSFORMATIONEN MIT TRANSFORMATIONSTABELLEN**

(30) Priorität: 15.08.2022 EP 22020390
(71) Anmelder: GMG GmbH & Co. KG, 72072 Tübingen (DE)
(72) Erfinder: Hoffstadt, Hanno, 89077 Ulm (DE)
(74) Vertreter: Rausch, Michael

(57) **Zusammenfassung**

Um ein Verfahren zur Durchführung von Farbraumtransformationen dahingehend zu verbessern, trotz Nutzung regelmäßiger mehrdimensionaler Tabellen mit möglichst hoher Genauigkeit einen hohen Durchsatz bei Farbtransformationen und gleichzeitig die volle Kontrolle über die Transformation in jedem Farbbereich zu haben, wird mit der Erfindung vorgeschlagen ein Verfahren zur rechnergestützten Durchführung von Transformationen von Farbdaten für ein Projekt von einem Quell-Farbraum in einen Ziel-Farbraum unter Nutzung von auf einer Transformationsvorschrift basierenden Transformationstabellen, in welchen einer Vielzahl von Eingabe-Farbdaten des Quell-Farbraumes jeweils eindeutige Ausgabe-Werte des Ziel-Farbraumes zugeordnet sind, wobei der Quellfarbraum n Farben und der Zielfarbraum m Werte umfasst, wobei für alle Eingabe-Farbdaten des Projekts unter Nutzung der Transformationstabellen Werte für den Ziel-Farbraum erzeugt und in einem Datensatz bereitgestellt werden, indem für Eingabe-Farbdaten aus den Transformationstabellen die korrespondierenden Ausgabe-Werte entnommen werden, gekennzeichnet durch folgende Merkmale :
e) Ermitteln aller Farb-Kombinationen der n Farben des Quell-Farbraumes, deren Farbanteile nicht Null sind;
f) Erzeugen und Speichern einer Unterraum-Transformations-Tabelle für jede dieser Farb-Kombinationen;
g) Bilden sämtlicher echter Teilmengen einschließlich der Nullmenge zu jeder Unterraum-Transformationstabelle und Erzeugen und Speichern dieser als separate, redundante Unterraum-Transformationstabellen;

Verwenden der gespeicherten Unterraum-Transformationstabellen für die Transformation, indem für jede Eingabe mit ihren Farbanteilen der n Farben die zugehörige Unterraum-Tabelle zugeordnet wird anhand derjenigen Farbanteile, die nicht Null sind.

## Beschreibung

Die vorliegende Erfindung betrifft ein Verfahren zur Durchführung von Transformationen von Farbdaten für ein Projekt von einem Quell-Farbraum in einen Ziel-Farbraum unter Nutzung von auf einer Transformationsvorschrift basierenden Transformationstabellen.

In der Druckindustrie werden sehr häufig Farbtransformationen benötigt, um die Datensätze für die zu druckenden farbigen Druckerzeugnisse herzustellen.

Ausgangspunkt sind digitale Layouts, die z. B. Farbbilder aus Fotografie oder Scan, Illustrationen und Text enthalten können. Diese Layouts sind Vorlagen, die entsprechend in Form von Druckerzeugnissen vervielfältigt werden sollen. Ein solches Layout ist in welcher Form auch immer entworfen oder entwickelt worden und repräsentiert von der farblichen Erscheinung her das, was für den jeweils vorgesehenen Zweck gewünscht wird. Jedes einzelne Layout-Objekt hat also eine farbliche Erscheinung, die sich eindeutig identifizieren lässt. Bekanntermaßen werden farbliche Erscheinungen durch die Mischung von nur wenigen Farben erzeugt, für Druckerzeugnisse beispielsweise durch einfaches Übereinanderdrucken von gerasterten Druckfarben, wobei jede Farbe durch ihre Wirkung einen gewissen Beitrag leistet und im Zusammenwirken der unterschiedlichen Farbschichten das Endergebnis erzeugt wird.

Die farbliche Erscheinung jedes einzelnen Layout-Objekts wird durch seine Farbwerte (von Bildpixeln, Konturfarben oder Füllfarben) definiert, die die Datenquelle darstellen. Im Falle von Bildpixeln handelt es sich oft um Millionen von Pixeln mit jeweils eigenen Farbwerten. Diese Quell-Farbwerte beziehen sich immer auf einen Quell-Farbraum mit einer bestimmten Anzahl von Farben. Das heißt, jedem Objekt im Layout ist ein Farbraum zugeordnet, der meist eine Beziehung zu einem Gerät hat, häufig ein ganz bestimmter RGB-Farbraum wie sRGB oder Adobe RGB, oder ein CMYK-Farbraum, nur Schwarz (Graustufen) oder ein anderer Druck-Farbraum. Die Objektfarbwerte sind entsprechend als RGB-Werte, CMYK- oder Graustufen-Werte (0-100% Farbe) oder andere Farbwerte beziffert. Die Gesamtanzahl der Gerätefarben des Quell-Farbraumes wird hier mit n bezeichnet.

Farbräume werden üblicherweise durch ICC-Farbprofile (ISO 15076-1:2010) beschrieben, Layouts durch PDF- und PDF/X-Dateien (ISO 15930-Serie), die diese ICC-Farbprofile enthalten oder referenzieren können.

Aus den unterschiedlichsten Gründen und Motiven soll das Layout reproduziert werden. Für die Reproduktion stehen die unterschiedlichsten Druckverfahren und Druckmaschinen zur Verfügung. Diese verfügen über die Möglichkeit, eine bestimmte Anzahl von Farben in einer bestimmten Art und Weise auf ein Trägermaterial aufzubringen. Dabei handelt es sich um die Gerätefarben des Drucksystems. Diese definieren bzw. sind Grundlage des Ziel-Farbraumes, der wiederum alle denkbaren Kombinationen der Gerätefarben des Drucksystems umfasst. Es kann sich auch um die Gerätefarben eines Monitors handeln. Man spricht hier von den m Gerätefarben des Ziel-Farbraumes. Auch sind Transformationen in geräteunabhängige Werte oft notwendig, wie Lab- oder Spektralfarben,beispielsweise um die Ergebnisse späterer Messungen von Ausdrucken überprüfen zu können oder eine geräteunabhängige Datenbasis für die Darstellung auf beliebigen Geräten zur Verfügung zu stellen. Deshalb spricht man oberbegrifflich von den m Werten des Zielfarbraumes.

Oft werden bei der Gestaltung des Layouts standardisierte Farbräume als Quell-Farbräume verwendet, aber der Druck findet mittels konkreter Ausgabesysteme mit ihrem individuell eigenen Farbverhalten statt. Daher ist es erforderlich, für jeden Rasterpunkt des Layouts die gegebene Kombination der n Gerätefarben des Quell-Farbraumes in eine für die weitere Verarbeitung erforderliche Kombination der m Werte des Ziel-Farbraumes zu transformieren. Das Ziel ist dabei, ein Ergebnis zu erzeugen, welches der Vorlage, also dem digitalen Layout, möglichst nahekommt, also im Idealfall die gleiche Erscheinung beim Betrachter hervorruft.

Als Rasterpunkt oder Pixel wird jeder Punkt eines Layouts bezeichnet, der sich durch eine vorgegebene Rasterung der Layout-Objekte ergibt. Diese wiederum steht im Zusammenhang mit der sogenannten Auflösung der Darstellung etwa für die Erstellung der Druckform. Legt man über ein Layout ein Raster mit i Zeilen und j Spalten, so ergibt sich eine Auflösung von i x j Pixeln. Jedes einzelne Pixel kann nun hinsichtlich seiner farblichen Konstruktion identifiziert werden.

Farbtransformationen werden unter anderem benutzt, um die Layoutdaten in druckfähige Daten für ein gewünschten Satz Druckfarben umzuwandeln. Dann entstehen z. B. einheitliche, reine CMYK-Daten für Offsetdruck. Außerdem werden Farbtransformationen benutzt, um die farbliche Erscheinung dieser Druckdaten verbindlich zu simulieren, bevor gedruckt wird. Die farbliche Erscheinung wird üblicherweise geräteunabhängig in dem CIELAB-Farbraum (kurz: Lab) oder mithilfe von spektralen Reflexionsfaktoren beschrieben. Man transformiert die Druckdaten mit ihrem zugeordneten Farbraum in diese geräteunabhängigen Farbdaten. Diese werden an einem kalibrierten Bildschirm oder mit speziellen Prüfdruck-Systemen dargestellt (ein sogenannter "Proof", meist mit Inkjet-Systemen). Verwandt damit ist die Aufgabe, Druckdaten für andere Druckverfahren anzupassen, d. h. aus existierenden Druckdaten durch eine Transformation neue Druckdaten für andere Druckfarben zu erzeugen und dabei den ursprünglichen Farbeindruck möglichst gut zu erhalten.

Bei den üblichen Druckvorgängen mit in der Regel nicht mehr als vier Farben sind diese Transformationsvorgänge weitgehend erschlossen und durch entsprechende Datensysteme standardi si ert.

Jedoch wird beispielsweise im Verpackungsdruck sehr häufig mit mehr als 4 Druckfarben gedruckt. Traditionell werden Markenfarben als Schmuckfarben ergänzt und Bilder mit produktspezifischen Farben aufgebaut (z. B. Milchprodukte mit einer zusätzlichen hellgrauen Druckfarbe, Schokoladenprodukte mit verschiedenen braunen Druckfarben). Bei durchsichtigen Folienverpackungen wird oft weiße Druckfarbe zusätzlich eingesetzt. Jede benutzte Druckfarbe belegt dabei ein Druckwerk in der Druckmaschine und braucht eine eigene Druckform für die Farbübertragung. Die Farben werden nacheinander aufgetragen, und es sind prinzipiell alle Farben miteinander kombinierbar (überdruckbar). Die Gesamtheit der separaten Druckformen führt zu dem Ausdruck "Separation" als Verfahren bzw. Ergebnis der Erstellung der Druckdaten.

Maschinen mit 7-10 Farbwerken sind keine Seltenheit im Flexodruck, Offsetdruck und Tiefdruck. Designer für Markenartikel können die Druckfarben aus tausenden Sonderfarben auswählen, etwa aus über 2000 Farbtönen im PANTONE^{®} System. Diese Druckfarben werden von Farbherstellern produziert und geliefert. Im sogenannten Digitaldruck werden Inkjet- und tonerbasierte Druckmaschinen eingesetzt, die oft 6-8 Farbwerke enthalten, aber mit festen Druckfarbsätzen betrieben werden, da Inkjet-Tinten und farbige Toner oft sehr spezielle, maschinenabhängige Verarbeitungseigenschaften haben müssen oder der Wechsel technisch zu umständlich wäre. Typische Farbsätze enthalten CMYK ergänzt um Orange oder Rot, Grün, Blau oder Violett, Weiß.

Digitaldruckverfahren arbeiten zurzeit zwar langsamer als konventionelle Druckverfahren, da aber keine Druckformen erstellt werden müssen und Farben nicht gewechselt werden, ist der Aufwand zum Einrichten sehr viel geringer, und damit werden kleine Auflagen ökonomischer und personalisierter Druck möglich. Hier besteht daher der Wunsch, eine anfangs konventionell produzierte Verpackung nach Bedarf in Kleinauflagen oder gar personalisiert (Auflage 1) zu drucken, wobei aber die farbliche Erscheinung möglichst identisch mit den zuvor gedruckten Produkten sein soll, die mit individuellen Sonderfarben produziert wurden. Denn im Verkaufsregal können verschiedene Chargen nebeneinanderstehen. Um das zu erreichen, werden die für das konventionelle Druckverfahren vorliegenden Druckdaten aus dessen Quell-Farbraum in einen Ziel-Farbraum konvertiert, der das Digitaldruckverfahren beschreibt. Im Extremfall des variablen, personalisierten Druckens müssen für jedes Exemplar andere Quell-Daten transformiert werden, dann wird die Transformation zu einem Engpass.

Die eingangs erwähnten Farbtransformationen konvertieren also von einem Quell-Farbraum Q (beispielsweise mit n Gerätefarben) in einen anderen Ziel-Farbraum Z (beispielsweise mit m Gerätefarben oder den 3 CIELAB-Werten L, a, b). Dies erfolgt durch Anwendung einer Transformationsvorschrift TRV. Dabei kann es sich um Rechenformeln, Transformations-Modelle oder bereits auf Basis der TRV erstellte Transformationstabellen handeln. Sie müssen oft pro Pixel angewendet werden, daher ist ein hoher Durchsatz wichtig (Millionen Pixel pro Sekunde). Um das zu erreichen, wird in einer angefertigten Tabelle interpoliert, wie zum Beispiel im ICC-Industriestandard. Die Tabelle ist für Kombinationen von n Farbwerten aufgebaut. Jede der n Eingangsfarben kann Werte zwischen 0 und 100% Farbauftrag annehmen. Die Tabelle kann nicht alle Kombinationen auflisten, sondern tastet jede Eingangsfarbe mit einer bestimmten vorgegebenen Auflösung ab. Sie ist ein regelmäßiges rechtwinkliges n-dimensionales Gitter, das alle Kombinationen der abgetasteten Stufen enthält. Dazwischen wird n-dimensional interpoliert. Die Genauigkeit hängt von der Abtastung ab. Typische Abtastungen sind für n=3 (RGB / Lab) 33 Stufen (33³ ≈ 36000 Tabelleneinträge), für n=4 (CMYK) 17 Stufen (alle 6.25%, 17⁴ ≈ 84000 Tabelleneinträge). Die Anzahl der Abstufungen ist die Basis der Potenz, die Anzahl n der Druckfarben steht im Exponenten. Bei der Erzeugung von Transformationstabellen handelt es sich um für den Fachmann geläufige Maßnahmen. Sie basieren beispielsweise auf der spektrometrischen Vermessung von gedruckten Farben, Berechnungen zur Abschätzung und/oder Interpolation und dergleichen.

Die Tabellengröße steigt exponentiell mit der Anzahl n der Eingangsfarben. Weil der Speicherplatz beschränkt ist, muss aus praktischen Gründen die Abtastung grober werden. Für den häufigen Fall n=7 werden oft nur noch 6 oder 7 Stufen verwendet. Ein Beispiel dafür ist das weit verbreitete Open-Source-Farbmanagementsystem LittleCMS, das 7 Stufen benutzt (alle 16.67%, 7⁷ ≈ 820000 Tabelleneinträge). Die Tabellenstruktur führt daher zu folgendem Problem: je mehr Druckfarben, desto größer ist die Tabelle, und desto weniger Abstufungen können gespeichert werden. Anwender erwarten bei CMYK + Zusatzfarben eine vergleichbare Genauigkeit, wie sie es von CMYK gewohnt sind. 7 Stufen sind erheblich zu grob.

Bekannte Lösungsansätze sind offenbart in der DE 10 2004 003 300 A1, wonach ZuordnungsTabellen, die mehr als vier Eingangs-Farbkomponenten haben, in mehrere Zuordnungstabellen mit maximal vier Eingangs-Farbkomponenten aufgeteilt werden. Mit dieser Technik soll das Problem der zu großen Zuordnungstabellen gelöst werden. Es handelt sich dabei um einen konkreten Vorschlag, dieses Problem zu lösen, indem konventionsgemäß grundsätzlich auf 4-Komponenten-Tabellen reduziert wird, da der Stand der Technik die zur seiner Zeit gültige Tatsache nutzt, dass auch in einem Sieben-Farbendruck üblicherweise nicht mehr als vier Farben an einer Stelle des Druckbogens übereinander gedruckt werden. Aus diesem Grunde wird auch die Reduktion auf 4-Komponenten-Tabellen forciert. Um dies im Zweifel sicherzustellen, werden zusätzliche Verfahren wie Gray Component Replacement (GCR) und Color Component Replacement (CCR) bei der Erstellung der Separationstabelle angewandt. Ein gleichartiger Stand der Technik ergibt sich aus Boll H:"A COLOR TO COLORANT TRANSFORMATION FOR A SEVEN INK PROCESS", PROCEEDINGS OF SPIE, IEEE, US, Bd. 2170, 1. Februar 1994 (1994-02-01), Seiten 108-118, und der US 5 892 891 A.

Bekannte Lösungsansätze verwenden ein Modell oder eine Kombination von Tabelle und Modell. Ein Modell ist eine meist mathematisch basierte Transformationsvorschrift. So kann der Lab-Farbwert eines Überdrucks aus den einzelnen Druckfarben geschätzt werden. Das geschieht z. B. bei der Darstellung von Layouts oder PDF-Dateien am Bildschirm und ist schnell, aber ungenau. In der ICC-Weiterentwicklung iccMAX wird vorgeschlagen, Einzelfarben spektral zu verrechnen, oder Tabellen für den CMYK-Anteil zu benutzen und deren Wert für jede weitere Farbe zu modifizieren. In allen Fällen ist das Hinzufügen einzelner Farben zu ungenau, weil es die Wechselwirkung der Farben in Überdrucken nicht oder unzureichend berücksichtigt, an denen diese Farben beteiligt sind.

Es gibt zwar genauere Modelle, die das Überdruckverhalten von Farbmischungen besser berechnen, aber die sind bei weitem nicht schnell genug, um für die Transformation von Millionen von Pixeln brauchbar zu sein. Außerdem liefern die Modelle Lab-Werte oder Spektren, aber keine Geräte-Farbwerte, sind also für direkte Transformation von Gerät zu Gerät ("device-link") nicht geeignet. Denn die auszugebenden Geräte-Farbwerte unterliegen oft speziellen Separationsregeln (s. u.) und brauchen für hohe Qualität meist eine besondere Aufbereitung. Die Transformation in Gerätefarben ist jedoch eine überaus häufige Anwendung.

Der Erfindung liegt die Aufgabe zugrunde, ein Verfahren zur Durchführung von Farbraumtransformationen dahingehend zu verbessern, trotz Nutzung regelmäßiger mehrdimensionaler Tabellen mit möglichst hoher Genauigkeit einen hohen Durchsatz bei Farbtransformationen und gleichzeitig die volle Kontrolle über die Transformation in jedem Farbbereich zu haben.

Die technische Lösung dieser Aufgabe besteht in einem Verfahren mit den Merkmalen des Patentanspruches 1. Weitere Vorteile und Merkmale ergeben sich aus den Unteransprüchen.

Es sind die n Farben des Quellfarbraumes gegeben, das heißt, wie viele und welche Farben im Quellfarbraum für dieses Projekt vorgesehen sind. Diese umfassen Standard-Farben, Basisfarben usw. Und sie umfassen Sonderfarben, die beispielsweise markenspezifisch sind. Weiterhin sind die m Werte des Zielfarbraumes vorgegeben.

Die Transformationen erfolgen anhand von Transformationstabellen.

Gemäß der Erfindung werden alle Farb-Kombinationen der n Farben des Quell-Farbraumes ermittelt, deren Farbanteile nicht Null sind. Für jede dieser Farbkombinationen wird eine Unterraum-Tabelle erzeugt und gespeichert. Schließlich werden sämtliche echte Teilmengen einschließlich der Nullmenge zu jeder dieser Unterraum-Transformationstabellen als separate, redundante Unterraum-Transformationstabellen erzeugt und gespeichert.

Die Gesamtheit dieser gespeicherten Unterraum-Transformationstabellen wird für die Transformation angewendet, indem für jede Kombination mit ihren Farbanteilen der n Farben die zugehörige Unterraum-Transformationstabelle zugeordnet wird anhand derjenigen Farbanteile, die nicht Null sind.

Die Erfindung bringt die Vorteile, dass die Auswahl der passenden Transformationstabelle einfacher, die gewählte Tabelle die kleinstmögliche Dimension (und damit die effizienteste Interpolation) hat, und schließlich die zu transformierenden Daten nicht umständlich um Leer-Dimensionen ergänzt werden müssen, um einer vorhandenen, aber größeren Tabelle zu entsprechen. Demgegenüber benötigen die redundanten Tabellen nur sehr geringen zusätzlichen Speicher.

Gemäß einem weiteren vorteilhaften Vorschlag der Erfindung werden anstelle der Erzeugung von Unterraum-Transformationstabellen bereits existierende ermittelt und gespeichert. Damit werden Rechenschritte eingespart.

Manche Farben werden nicht gleichzeitig verwendet, z. B. werden komplementäre Farbenpaare nicht benutzt, weil Druckschwankungen sich in diametral entgegen gesetzte Farbrichtungen auswirken würden, also instabil wären. Solche sich neutralisierenden Farbtöne können viel leichter und stabiler mit anderen Farben erzielt werden (Grautöne z. B. mit Schwarz).

Bei den gebräuchlichen periodischen Druckrastern stehen nur 4 Muster zur Verfügung, die ohne Interferenzstörungen (Moiré) oder Empfindlichkeit gegen Ausrichtungsfehler (Passer-Schwankungen) überdruckbar sind, so dass in diesem Fall nicht mehr als 4 gerasterte Farben auftreten. Auch ohne solche Einschränkungen aufgrund der Rastertechnologie sind Kombinationen von 3-4 Farben normalerweise ausreichend.

Außerdem ist der Gesamtfarbauftrag begrenzt, oft können nur 200% bis 400% Summenauftrag drucktechnisch gut verarbeitet werden (Haftung, Trocknung). Auch hieraus ergibt sich ein Kriterium zur Reduzierung von erzeugten und gespeicherten Daten, da den Gesamtfarbauftrag übersteigende Kombinationen nicht berücksichtigt werden müssen.

Solche Regeln betreffen zunächst den Zielfarbraum Z zur Erzeugung der Separation in Farbtransformationen, aber sobald Druckdaten vorliegen, werden sie auch zu einer Quelle für die Bestimmung des farblichen Erscheinungsbildes. Daher beschreiben diese Regeln auch die Erwartung, welche Farbkombinationen des Quell-Farbraum Q potenziell auftreten können.

Erfindungsgemäß werden also bei dem Verfahren aus den n Farben des Quell-Farbraumes Q alle benötigten bzw. festgelegten Kombinationen der n Farben des Quell-Farbraumes Q gebildet und für jede Kombination eine Unterraum-Transformationstabelle gespeichert, in welcher jeder Farbkombination der Farben des Quell-Farbraumes Q eine Farbkombination der m Farben des Ziel-Farbraumes Z zugeordnet ist, und diese Unterraum-Tabellen für die Farbraumtransformationen genutzt. Die Entnahme der m Farben des Ziel-Farbraumes Z aus den Tabellen kann direkt oder indirekt erfolgen, beispielsweise nach einer entsprechenden weiteren Berechnung oder Interpolation.

Ausgehend von einem Verfahren zur Durchführung von Transformationen von Farbdaten für ein Projekt von einem Quell-Farbraum mit n Farben in einen Ziel-Farbraum mit m Farben, unter Nutzung von Transformationstabellen, in welchen einer Vielzahl von Eingabe-Farbdaten des Quell-Farbraumes jeweils eindeutige Ausgabe-Farbdaten des Ziel-Farbraumes zugeordnet sind, wobei für alle Eingabe-Farbdaten des Projekts unter Nutzung der Transformationstabellen Farbdaten für den Ziel-Farbraum erzeugt und in einem Datensatz bereitgestellt werden, indem für Eingabe-Farbdaten aus den Transformationstabellen die korrespondierenden Ausgabe-Farbdaten direkt oder indirekt entnommen werden, werden die im Quell-Farbraum vorliegenden Farbdaten eines jeden Layout-Objektes eines Projektes gewissermaßen in die Farbdaten im Ziel-Farbraum übersetzt.

Die Erfindung sieht das Speichern von genauen Tabellen auch bei vielen Farben und für direkte Konvertierungen (n Farben Q nach m Farben Z) vor. Dazu wird erfindungsgemäß die Anzahl gespeicherter Einträge intelligent reduziert.

Erfindungsgemäß wird somit vorgeschlagen, Unterraum-Tabellen zu speichern statt einer vollständigen Tabelle für den gesamten n-dimensionalen Farbraum. Jede der n Farben muss in mindestens einem Unterraum vorkommen. Ein k-dimensionaler Unterraum wird durch Auswahl von k aus n Farben gebildet.

Gemäß einem vorteilhaften Vorschlag der Erfindung soll jede der n Farben in allen Unterräumen, in denen sie vorkommt, auf gleiche Weise von 0 bis 100% abgetastet werden, um Konsistenz zu garantieren. Gemäß der Erfindung ist vorgesehen, dass Unterräume Schnittmengen von identischen, redundanten Einträgen haben. Diese müssen aus Konsistenzgründen übereinstimmen. Zum Beispiel ist in jeder Tabelle die k-dimensionale Null-Kombination (der Eintrag des unbedruckten Substrats) redundant enthalten.

Die Erfindung ermöglicht es nun, eine übliche Farbtransformation anzupassen: bei jeder Eingabefarbe (d.h. jeder zu transformatierenden Kombination der n Farben) werden diejenigen der n Komponenten ermittelt, die nicht Null sind. Es wird also der zugehörige Unterraum ermittelt. Nun wird geprüft, ob eine Tabelle für diesen Unterraum vorliegt. Das wird der Fall sein, wenn alle relevanten Farbkombinationen berücksichtigt wurden. Dann werden die Nicht-Null-Eingabewerte darin interpoliert.

Interpolation kann z.B. durch k-dimensionale Interpolationsverfahren wie multilinearer oder n-Simplex-Interpolation erfolgen.

Sollte es keine passende Tabelle geben, ist die Anfrage ungültig, d.h. die Eingabe-Farbdaten sind außerhalb der im Projekt vorgesehenen Teilmengen-Kombinationen der n Farben. Dann kann z. B. abgebrochen oder spezielle Signalfarben als Ausgabe-Farbdaten erzeugt werden, um zu signalisieren, dass die Eingabe-Farbdaten nicht den Anforderungen entsprechen. Durch diese Anpassung sind beliebige heterogene Unterraum-Mischungen möglich, die sich ganz nach den Anforderungen der Anwendung richten.

Um den zugehörigen Unterraum schneller anwenden zu können, wird vorgeschlagen, aus den gespeicherten Unterräumen alle niedriger-dimensionalen Teilräume als separate redundante Kopien zu speichern. Aufgrund der exponentiellen Größenrelation sind diese zusätzlichen niedrig-dimensionalen Kopien klein gegen die eigentlichen Daten.

Erfindungsgemäß werden identische Werte in redundanten Tabellen zu garantiert, indem im abgespeicherten Dateiformat für die Tabellenstruktur keine Redundanz existiert, und zwar indem zuerst der null-dimensionale Unterraum gespeichert wird, dann die hinzukommenden 1-dimensionalen Unterräume ohne die Null-Stufe, dann die hinzukommenden 2-dimensionalen Unterräume ohne die Null-Stufe usw. Beim Einlesen werden die unvollständigen Unterräume durch Ergänzen der Null-Stufen aus den niedriger-dimensionalen Tabellen vervollständigt.

Weiterhin wird mit der Erfindung vorgeschlagen, Unterraum-Tabellen effizient aufzusuchen und zuzuordnen durch Beschreibung von Unterräumen mit einem binären Zahlenwert, der jeder der n Dimensionen ein Bit zuordnet. Das Bit wird auf 1 gesetzt, wenn der Farbwert > 0 ist, sonst auf 0. Damit ist eine Zuordnung der bis zu 2ⁿ Unterraumtabellen direkt über eine Liste mit Einträgen von 0...2ⁿ-1 möglich.

Während bunt gemischte Unterraum-Tabellen ein Höchstmaß an Flexibilität erlauben, kann es vorteilhaft sein, homogene, vollständige Unterraum-Tabellen zu verwenden. Zum Beispiel können per Konvention nur Unterräume mit gleicher Dimension k benutzt werden, oder gar alle der k aus n Kombinationen von Unterräumen gespeichert, also sinnlose Kombinationen nicht weggelassen werden (z. B. komplementäre Farben oder Farben, die die gleiche periodische Rasterung haben). Der Vorteil liegt in einer Reduktion der Fallunterscheidungen zwischen vorhandenen und nicht vorhandenen Tabelleneinträgen, mit denen erzeugende, visualisierende oder editierende Programme umgehen können müssten. Es ist allerdings auch einfach, beim Einlesen einer beliebigen Unterraum-Struktur festzustellen, welchen Grad an Homogenität oder Vollständigkeit sie aufweist, so dass das nicht per se festgelegt werden muss.

In diesem vereinfachten Fall von homogenen und vollständigen Unterraum-Tabellen wird erfindungsgemäß vorgeschlagen, den Wert k pauschal so zu wählen, dass alle relevanten (zu transformierenden) Farbkombinationen abgedeckt sind. Wie oben beschrieben ist eine mögliche sinnvolle Größe für die Graphische Industrie k=4. Somit würden Tabellen erzeugt für alle relevanten Kombinationen, die aus je 4 Farben gebildet werden können. Dann werden die echten Teilmengen einschließlich der Null-Mengen (also direkter Druck auf das Substrat), gebildet und die Unterraum-Transformationstabellen ermittelt.

Die Unterraum-Transformationstabelleneinträge entsprechen sinnvollerweise einem rektilinearen Gitter, also dem kartesischen Produkt aus allen Kombinationen von gewünschten Abstufungen jeder der k aus n Eingabe-Farben, die in dem Unterraum vorkommen.

Die Erfindung wird im Folgenden anhand von Beispielen weiter erläutert. Daraus ergeben sich weitere Vorteile und Merkmale der Erfindung.

Als erstes Beispiel diene ein Quell-Farbraum mit den Farben C, M, Y (n=3). Zum Zwecke der Illustration soll keine 3-dimensionale Tabelle gespeichert werden, stattdessen nur alle Unterräume mit k=2 gleichzeitig auftretenden Farben. Es würden also die drei Unterräume CM, CY, MY gespeichert. Wenn nur diese Tabellen vorliegen, muss jede Anfrage mit weniger als 2 Farben, etwa nur M, erst auf einen der passenden Unterräume abgebildet werden. Das wäre entweder CM oder MY. Beides ist gleich gut, da die Tabellen konsistent sein müssen. In beiden Fällen müsste aber für die 2-dimensionale Tabelleninterpolation eine zusätzliche Null korrekt ergänzt werden (C=0 als ersten Wert für CM, oder Y=0 als zweiten Wert für MY). Es ist also eine umständliche Zuordnung und Ergänzung erforderlich.

Wenn aber der 1-dimensionale Unterraum M schon vorliegt, kann er direkt verwendet werden, und die Ergänzung entfällt. Als weiterer Vorteil ist dann die Dimension der Tabelle kleiner, so dass die multidimensionale Interpolation darin schneller ist. Im 0-dimensionalen Fall ist es sogar nur das Ablesen des einen Datenpunktes. Daher ist es sinnvoll, die Tabellen der zusätzlichen redundanten niedriger-dimensionalen Teilräume für Transformationen zur Verfügung zu haben.

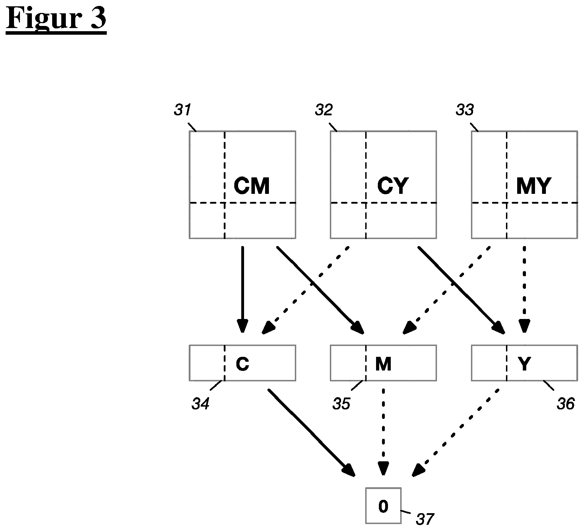

Da sie redundant sind, können sie auf einfache Weise aus den abgespeicherten Unterräumen ergänzt werden. Siehe dazu auch Figur 3. So werden alle niedriger-dimensionalen Teilräume aus CM, CY, MY erzeugt:
Aus CM würden die 1-dimensionalen Tabellen für C (mit M-Wert 0) und für M (mit C-Wert 0) hinzugefügt.

Aus C würde die 0-dimensionale Tabelle des unbedruckten Substrats (mit C-Wert 0) hinzugefügt. Ebenso aus M, aber sie existiert schon.

Aus CY existiert C schon, es kommt nur die 1-dimensionale Tabelle Y (mit C-Wert 0) hinzu. Aus MY existieren M und Y schon, es kommt keine weitere 1-dimensionale Tabelle hinzu.

Eine Größenbetrachtung zu dem zusätzlichen Speicherbedarf für die redundanten Tabellen: Wenn alle Farben in 10 Stufen vorliegen würden, hätten die abgespeicherten Tabellen CM, CY, MY jeweils 10² = 100 Einträge (insgesamt 300). Die zusätzlichen Tabellen C, M, Y haben jeweils 10 Einträge, die 0-dimensionale Tabelle des Substrates hat 1 Eintrag (insgesamt 31 zusätzlich generierte Einträge). Der Zusatzaufwand beträgt hier noch gut 10% (331 statt 300 Einträge), wird aber viel kleiner bei steigender Anzahl Farben n. Die nicht abgespeicherte vollständige CMY-Tabelle hätte dagegen 10³ = 1000 Einträge.

Zur Erläuterung der Benennung von Tabellen durch binäre Zahlenwerte dient wieder das obige Beispiel. Es werden die Zweierpotenzen 4,2,1 den Farben CMY zugeordnet. Die drei 2-dimensionalen Unterräume hätten die binären Zahlenwerte CM:4+2=6, CY:4+1=5, MY:2+1=3. Die erzeugten 1-dimensionalen Tabellen wären C:4, M:2, Y:1. Die 0-dimensionale Tabelle hätte Substrat:0. So sind allen Zahlenwerten von 0 bis 6 Unterraum-Tabellen zugeordnet. Nur nicht der Zahl 2³-1=7, das wäre die n=3-dimensionale vollständige Tabelle, die im Beispiel nicht vorhanden sein soll.

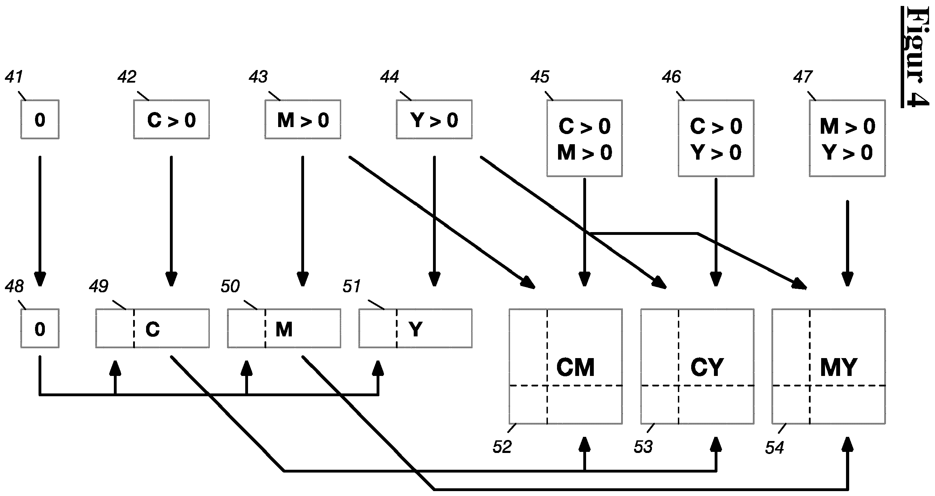

Mit Bezug auf die Garantie identischer Werte in redundanten Tabellen durch ein nichtredundantes Speicherformat kann am Beispiel CM das unbedruckte Substrat (0-dim) gespeichert werden, dann 1-dimensionale Abstufungen von C > 0, dann 1-dim. Abstufungen von M > 0, dann die 2-dim. Kombinationen von C > 0 + M > 0. Siehe dazu Figur 4. Beim Einlesen würde das unbedruckte Substrat (der Null-Eintrag) gelesen, dann die 1-dimensionale Abstufungen von C > 0, zu denen die 0 hinzugefügt wird, so dass die C-Tabelle vollständig ist, dann die 1-dim. Abstufungen von M > 0, zu denen die gleiche 0 hinzugefügt wird, so dass M vollständig ist. Dann werden die 2-dim. Kombinationen von C > 0 + M > 0 gelesen, denen man an der Ecke die 0 und an den Kanten die 1-dim. C und M hinzufügt, so dass CM vollständig ist. Für weitere Tabellen, etwa CY, MY, geht es sinngemäß genauso.

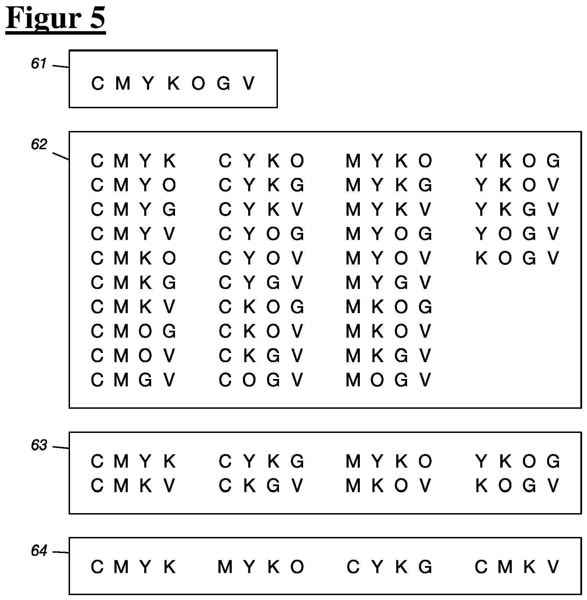

In einem weiteren Beispiel betrachte man 7 Farben (CMYK + 3 weitere) mit einer Auflösung von 17 Stufen (typische CMYK-Auflösung). Die vollständige Tabelle hätte 17⁷ ≈ 410 Millionen Tabelleneinträge. Wenn man dagegen nur Unterräume mit k=4 Dimensionen benötigt, gibt es zunächst 35 Möglichkeiten, 4 aus 7 Farben auszuwählen. Jede der 35 Tabellen hätte 17⁴ ≈ 84000 Tabelleneinträge, alle zusammen 2,9 Millionen. Dabei sind noch keine Kombinationen weggelassen worden, die nicht relevante Farbenpaare enthalten (siehe Figur 5). Trotzdem ist der Aufwand mehr als 100-mal niedriger. Das betrifft nicht nur den Speicherplatz, sondern auch die Rechenzeit für die Erstellung, etwa mit aufwändigen Modellen. Alle Farbkombinationen mit höchstens k Komponenten können schnell und exakt interpoliert werden.

Die zusätzlich für die Transformation generierten redundanten Unterräume mit k<4 sind: 35 Unterräume für 3 aus 7 Farben, 21 Unterräume für 2 aus 7 Farben, 7 Unterräume für 1 aus 7 Farben, 1 Unterraum ohne Farbe. In der Summe sind das 35 ^{∗} 17³ + 21 ^{∗} 17² + 7 ^{∗} 17¹ + 1 ^{∗} 17⁰ = 178144 Einträge oder gerade mal 6% zusätzlicher Hauptspeicherbedarf.

In einem weiteren Beispiel betrachte man 15 Farben (Obergrenze in ICC-Profilen) mit einer Auflösung von 10 Stufen (alle 11%). Die vollständige Tabelle hätte 10¹⁵ = 1 Billiarde Tabelleneinträge und wäre viel zu groß. Für 4 aus 15 Farben gibt es aber nur 1365 Möglichkeiten, jede der 1365 Tabellen hätte 10⁴ = 10000 Tabelleneinträge, alle zusammen 13,65 Millionen. Die zusätzlichen redundanten Tabellen für 3 aus 15 (455), 2 aus 15 (105), 1 aus 15 (15) und 0 aus 15 (1) brauchen 455 ^{∗} 10³ + 105 ^{∗} 10² + 15 ^{∗} 10¹ + 1 ^{∗} 10⁰ = 465651 Einträge oder etwa 3% zusätzlichen Hauptspeicherbedarf. Der Speicherbedarf wäre weit unter 1 GB und damit immer noch handhabbar.

Die Erfindung beschreibt ein neuartiges Verfahren zur Aufbereitung und Bereitstellung von Transformationstabellen. Damit ergeben sich neuartige Vorrichtungen zur Durchführung entsprechender Transformationen, bestehend aus Rechneranlagen mit entsprechenden Eingabe- und Ausgabevorrichtungen sowie Prozessoren und Speichereinheiten, auf welchen die erfindungsgemäßen Transformation Tabellen verwaltet werden. Die Kombination der Hardware, der Daten und der entsprechenden Software ergeben ein Verfahren zur Durchführung von Farbraumtransformationen.

Die Erfindung beschreibt eine für den Fachmann praktikable und umsetzbare Lösung, mit welcher selbst bei sehr hoher Auflösung eines Layouts und einer großen Anzahl von Quellfarben eine ausreichend schnelle und qualitativ hochwertige Farbraumtransformation in den Farbraum des konkreten Druck-Systems möglich ist.

Weitere Vorteile und Merkmale ergeben sich aus der folgenden Beschreibung anhand der Figuren. Dabei zeigen:
- Figur 1: ein Flussdiagramm zur Erläuterung der Verfahrensschritte.
- Figur 2: ein Flussdiagramm zur Erläuterung der Transformation.
- Figur 3: die Ergänzung niedriger-dimensionaler Unterraum-Tabellen.
- Figur 4: die Konstruktion der Unterraum-Tabellen aus redundanzfreier Speicherung.
- Figur 5: vollständige und relevante Unterraum-Tabellen für ein 7 Farben-Beispiel.

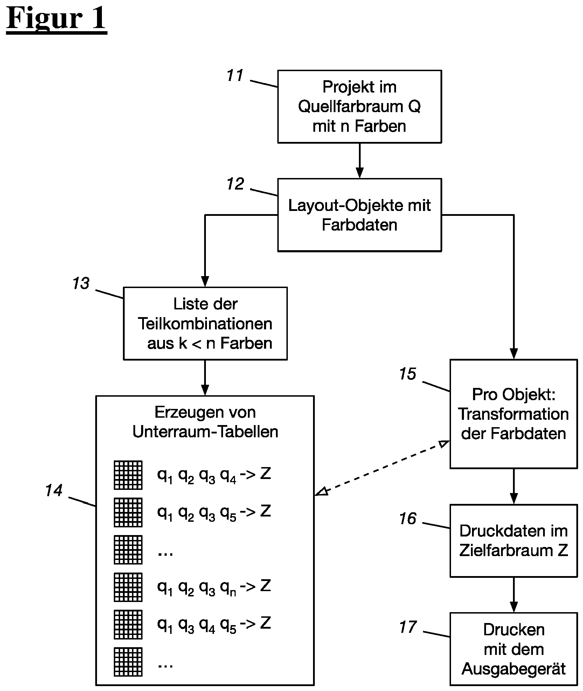

Gemäß Figur 1 gibt es ein darzustellendes Projekt 11, zu welchem in 12 die Gesamtheit der Farbdaten eines jeden Layout-Objektes im Quell-Farbraum mit n Farben vorliegen.

Im Prozessschritt 13 werden die Teilkombinationen aus k<n Farben gebildet. Zu jeder Teilkombination wird im Schritt 14 eine Unterraum-Transformationstabelle erzeugt. Die echten Untermengen davon sind hier nicht dargestellt. Im Schritt 15 werden die Farbdaten der n Farben jedes Layout-Objektes unter Nutzung der Unterraum-Transformationstabellen aus Schritt 14 in Farbdaten der m Farben des Ziel-Farbraumes transformiert. Daraus werden im Schritt 16 die Druckdaten zusammengestellt für das Ergebnis 17, welches auf einem Ausgabe-Gerät mit m Gerätefarben erzeugt wird.

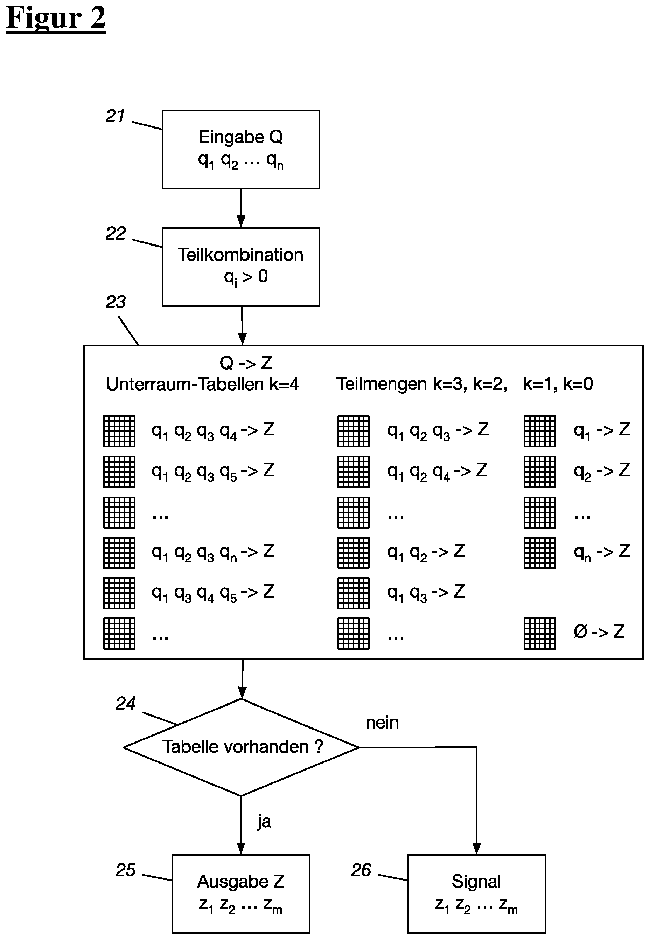

Figur 2 zeigt die Transformation 15 im Detail. Die Eingabe 21 sind die Farbdaten des Quell-Farbraums mit n Farben für ein Objekt. Im Schritt 22 wird die zugehörige Teilkombination bestimmt, die aus den Anteilen besteht, die nicht Null sind. Im Schritt 23 wird in den zuvor gebildeten Unterraum-Tabellen sowie in deren echten Teilmengen gesucht, ob eine Tabelle vorhanden ist, die diese Teilkombination 22 enthält. Im Schritt 24 wird das Ergebnis geprüft.

Wenn die Unterraum-Tabellen 23 passend für die Eingabe 21 erzeugt wurden, gibt es mindestens eine passende Tabelle, aus der als Ergebnis 25 die Farbdaten der m Farben des Ziel-Farbraumes ermittelt werden. Falls keine Tabelle gefunden wurde, wird im Schritt 26 ein Fehler signalisiert, z. B. durch eine Signalfarbe bestehend aus speziellen m Farbwerten der m Ziel-Farbraumes.

Figur 3 zeigt beispielhaft die drei 2-dimensionalen Unterraum-Tabellen 31, 32, 33 für CM, CY und MY. Die redundanten 1-dimensionalen Unterraum-Tabellen 34,35,36 für C, M, Y können aus 31-33 extrahiert werden. So kann C gewonnen werden aus CM oder CY, M aus CM oder MY, Y aus CY oder MY. Die redundante 0-dimensionale Unterraum-Tabellen 37, die nur das unbedruckte Substrat enthält, kann aus jeder der höher-dimensionalen Tabellen gewonnen werden.

Figur 4 geht von einem Speicherformat ohne Redundanz aus. Dabei werden alle Unterraum-Tabellen jeweils ohne Null-Elemente von einer oder mehreren Farben gespeichert, also in einer gekürzten Form. Damit gibt es keine Überlappungen zwischen den gespeicherten Tabellen. Das einzige Null-Element 41 ist die 0-dimensionale Tabelle mit dem Eintrag für das unbedruckte Substrat. Die 1-dimensionalen gekürzten Tabellen 42, 43, 44 für C, M, Y werden mit dem Null-Element 48 (entspricht 41) verbunden und damit zur vollständigen 1-dimensionalen Unterraum-Tabelle 49, 50, 51 komplettiert, in der nun wie üblich interpoliert werden kann. Ebenso werden die 2-dimensionalen gekürzten Tabellen 45, 46, 47 mit den niedriger-dimensionalen Tabellen vervollständigt, was die Tabellen 52, 53, 54 ergibt. Sinngemäß wird das Verfahren für alle gespeicherten gekürzten Tabellen fortgesetzt.

Figur 5 zeigt zu einem Quell-Farbraum 61 mit den 7 Farben C, M, Y, K, O, G, V die vollständige Liste 62 aller 4-dimensionalen Unterräume. Das sind die 35 Kombinationen, wie man 4 aus 7 Farben auswählen kann. Wenn in Druckprojekten keine Farbkombinationen verwendet werden, die komplementäre Farben enthalten, reduziert sich die notwenige Liste auf die in 63 gezeigten 8 Unterräume. Wenn schließlich die Zusatzfarben O, G, V jeweils nur in ihren eigenen Farbtonsektoren eingesetzt werden, also nicht gemeinsam, verbleiben nur noch 4 Unterräume wie in Liste 64 gezeigt.

### Bezugszeichen

- 11: Projekt im Quellfarbraum mit n Farben
- 12: Layout-Objekte mit Farbdaten
- 13: Liste der Teilkombinationen aus k<n Farben
- 14: Erzeugen von Unterraum-Tabellen
- 15: Transformation der Farbdaten
- 16: Druckdaten im Zielfarbraum Z
- 17: Drucken mit dem Ausgabe-Gerät
- 21: Eingabe der Farbdaten des Quellfarbraumes mit n Farben
- 22: Bestimmen der Teilkombinationen
- 23: Suchen der Unterraumtabelle
- 24: Prüfen des Ergebnisses
- 25: Anwenden der Tabelle und Ausgabe der Farbdaten im Zielfarbraum
- 26: Fehlersignatur
- 31, 32, 33: gespeicherte Unterraum-Tabelle
- 34, 35, 36, 37: extrahierte niedriger-dimensionale Tabelle
- 41: 0-dimensionale Tabelle
- 42, 43, 44: 1-dimensionale Tabelle ohne Nullwerte
- 45, 46, 47: 2-dimensionale Tabelle ohne Nullwerte
- 48: 0-Element
- 49, 50, 51: 1-dimensionale Tabelle mit 0-Element verbunden
- 52, 53, 54: 1-dimensionale Tabelle mit 0-Element verbunden
- 61: Quellfarbraum mit 7 Farben
- 62: Liste der 4-dimensionalen Unterräume
- 63: Reduktion bei Verzicht auf komplementäre Farben
- 64: Reduktion aufgrund Zusatzfarben-Separation

## Patentansprüche

1. Verfahren zur rechnergestützten Durchführung von Transformationen von Farbdaten für ein Projekt von einem Quell-Farbraum in einen Ziel-Farbraum unter Nutzung von auf einer Transformationsvorschrift basierenden Transformationstabellen, in welchen einer Vielzahl von Eingabe-Farbdaten des Quell-Farbraumes jeweils eindeutige Ausgabe-Werte des Ziel-Farbraumes zugeordnet sind, wobei der Quellfarbraum n Farben und der Zielfarbraum m Werte umfasst, wobei für alle Eingabe-Farbdaten des Projekts unter Nutzung der Transformationstabellen Werte für den Ziel-Farbraum erzeugt und in einem Datensatz bereitgestellt werden, indem für Eingabe-Farbdaten aus den Transformationstabellen die korrespondierenden Ausgabe-Werte entnommen werden, **gekennzeichnet durch** folgende Merkmale :
a) Ermitteln aller Farb-Kombinationen der n Farben des Quell-Farbraumes, deren Farbanteile nicht Null sind;
b) Erzeugen und Speichern einer Unterraum-Transformations-Tabelle für jede dieser Farb-Kombinationen;
c) Bilden sämtlicher echter Teilmengen einschließlich der Nullmenge zu jeder Unterraum-Transformationstabelle und Erzeugen und Speichern dieser als separate, redundante Unterraum-Transformationstabellen;
d) Verwenden der gespeicherten Unterraum-Transformationstabellen für die Transformation, indem für jede Eingabe mit ihren Farbanteilen der n Farben die zugehörige Unterraum-Tabelle zugeordnet wird anhand derjenigen Farbanteile, die nicht Null sind.

2. Verfahren nach Anspruch 1, **dadurch gekennzeichnet, dass** Schritt b) aufgeteilt wird in
b1) Ermitteln und Speichern bereits existierender Unterraum-TransformationsTabellen zu ermittelten Farb-Kombinationen;
b2) Erzeugen und Speichern einer Unterraum-Transformations-Tabelle für jede der Farb-Kombinationen, zu denen in b1) keine existierende Unterraum-Transformations-Tabelle ermittelt wurde.

3. Verfahren nach einem der vorhergehenden Ansprüche, **dadurch gekennzeichnet, dass** für jede der n Eingabe-Farben eine schrittweise Abstufung von 0 bis 100% entsprechend einer für das Projekt vorgegebenen Genauigkeit festgelegt wird und diese Abstufungen für die Bildung der Unterraum -Transformationstabellen genutzt werden.

4. Verfahren nach einem der vorhergehenden Ansprüche, **dadurch gekennzeichnet, dass** bei der Anwendung der Unterraum-Transformationstabellen die Ausgabe-Werte interpoliert werden.

5. Verfahren nach einem der vorhergehenden Ansprüche, **dadurch gekennzeichnet, dass** die Werte des Ziel-Farbraumes geräteabhängige Werte sind.

6. Verfahren nach einem der vorhergehenden Ansprüche, **dadurch gekennzeichnet, dass** das Projekt ein Druckprojekt ist mit einem eingeschränkten drucktechnisch verarbeitbaren Gesamtfarbauftrag, für das nur Unterraum-Transformationstabellen gespeichert und genutzt werden, welche die den im Projekt zulässigen Gesamtfarbauftrag der Eingabe-Farbdaten nicht überschreiten.

7. Verfahren nach einem der vorhergehenden Ansprüche 1 bis 4, **dadurch gekennzeichnet, dass** die Werte des Ziel-Farbraumes geräteunabhängige Werte sind.

8. Verfahren nach einem der vorhergehenden Ansprüche, **dadurch gekennzeichnet, dass** die Unterraum-Transformationstabellen mittels eines binären Zahlenwerts indiziert werden, der bei jeder in der Teilmenge auftretenden Farben i aus den gesamten n Farben, die von 0 bis n-1 durchnummeriert werden, ein gesetztes Bit an der Position 2' hat, und ebenso jedes Eingabe-Farbdatum durch einen weiteren binären Zahlenwert bezeichnet wird mit gesetzten Bits für diejenigen seiner n Komponenten, die nicht Null sind, damit über diesen binären Zahlenwert des Eingabe-Farbdatums die zugehörige Unterraum-Tabelle direkt ausgewählt werden kann.

9. Verfahren nach einem der vorhergehenden Ansprüche, **dadurch gekennzeichnet, dass** das Verfahren ausgeführt wird auf einer Rechnereinheit mittels einer Steuerungssoftware, wobei die Rechnereinheit eine Eingabeeinheit zur Bereitstellung der digitalen Farbdaten des Projekts und eine Ausgabeeinheit zur Ausgabe der transformierten Farbdaten sowie einen Speicher umfasst, auf welchem die Transformationstabellen gespeichert sind, wobei mittels der Steuerungssoftware für Eingabe-Farbdaten des Projekts unter Nutzung der Transformationstabellen Werte für den Ziel-Farbraum erzeugt und in einem Datensatz bereitgestellt werden.
